(19) Europäisches Patentamt
European Patent Office
Office européen des brevets

(11) Veröffentlichungsnummer: **0 254 991**
**B1**

# (12) EUROPÄISCHE PATENTSCHRIFT

(45) Veröffentlichungstag der Patentschrift: **23.05.90**

(51) Int. Cl.[5]: **C09B 29/085,** D06P 1/18

(21) Anmeldenummer: **87110353.7**

(22) Anmeldetag: **17.07.87**

(54) **Azofarbstoffe.**

(30) Priorität: **30.07.86 DE 3625692**
**19.02.87 DE 3705223**

(43) Veröffentlichungstag der Anmeldung:
**03.02.88 Patentblatt 88/5**

(45) Bekanntmachung des Hinweises auf die Patenterteilung:
**23.05.90 Patentblatt 90/21**

(84) Benannte Vertragsstaaten:
**CH DE FR GB LI**

(56) Entgegenhaltungen:
**EP-A- 0 025 903**
**DE-A- 3 404 130**
**FR-A- 2 383 924**
**GB-A- 2 034 736**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Hamprecht, Rainer, Dr., Im Kerberich 25,**
**D-5068 Odenthal-Blecher(DE)**

**EP 0 254 991 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung sind Farbstoffe der Formel

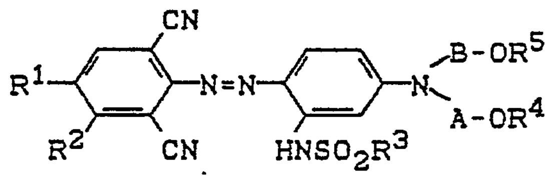

(I)

worin
$R^1$ H, $C_1$–$C_4$-Alkyl, $C_1$–$C_4$-Alkoxy, Chlor, Brom oder $C_5$–$C_6$-Cycloalkyl,
$R^2$ Wasserstoff, Methyl oder Chlor,
$R^3$ gegebenenfalls durch Cl oder $C_1$–$C_2$-Alkoxy substituiertes $C_1$–$C_4$-Alkyl,
$R^4$, $R^5$ gleiches oder verschiedenes $C_1$–$C_2$-Alkyl und
A/B gleiches oder verschiedenes $C_2$–$C_4$-Alkylen bedeuten – mit Ausnahme der Verbindung der Formel

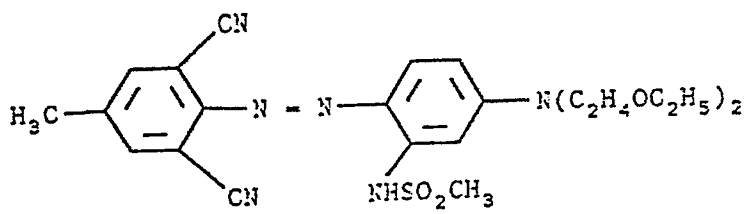

gemäß Beispiel 5 der DE-A 2 846 438 (entspricht GB-A 2 034 736)

Bevorzugt sind Farbstoffe der Formel I, worin

a) $R^1$ $C_1$-$C_2$-Alkyl,

$R^2$ Wasserstoff

$R^3$ $C_1$-$C_2$-Alkyl,

$R^4$, $R^5$ Methyl und

A/B $C_2H_4$ bedeuten.

b) $R^1$ H oder $C_2$-$C_4$-Alkyl,

$R^2$ Wasserstoff,

$R^3$ $C_1$-$C_2$-Alkyl,

$R^4$, $R^5$ $C_1$-$C_2$-Alkyl und
A/B $C_2H_4$ bedeuten.

c) $R^1$ Cl oder Br,

$R^2$ Wasserstoff,

$R^3$ $C_1$-$C_2$-Alkyl,

$R^4$, $R^5$ $C_1$-$C_2$-Alkyl und

A/B $C_2H_4$ bedeuten.

Besonders bevorzugt sind Farbstoffe der Formel I mit $R^1 = CH_3$.
Man erhält diese Farbstoffe in an sich bekannter Weise durch sog. Cyanaustausch an entsprechenden o,o'-Dihalogenazoverbindungen (vgl, z.B. DE 27 11 130 = US 4479 899 bzw. 4452 609).
Die o,o'-Dihalogenazoverbindungen erhält man durch Kuppelung der entsprechenden diazotierten Aniline auf entsprechende Kupplungskomponenten, die man wiederum beispielsweise durch Verseifung

der entsprechenden 3-Acetylamino-N,N-dialkoxyalkylaniline und anschließende Acylierung der freien 3-Aminogruppe mit Verbindungen der Formel $R^3SO_2Cl$ gewinnen kann.

Die neuen Farbstoffe eignen sich hervorragend zum Färben von Synthesefasern, insbesondere Polyester- und Cellulosetriacetatfasern, die in einem sehr klaren roten Farbton gefärbt werden. Sie zeichnen sich dabei durch eine geringe Neigung zur Thermomigration aus, d.h. der unerwünschten Eigenschaft vieler Dispersionsfarbstoffe, bei der Thermofixierung aus der Faser auszubluten.

Die erhaltenen Färbungen weisen im übrigen gute Allgemeinechtheiten auf.

Nächstvergleichbaren bekannten Farbstoffen gemäß DE 2 711 130 (entspricht FR-A 2 383 924), die an sich ebenfalls anwendungstechnisch sehr wertvolle Produkte sind, sind die erfindungsgemäßen Verbindungen hinsichtlich jener Thermomigration überlegen.

Beispiel 1. Herstellung der Verbindung der Formel

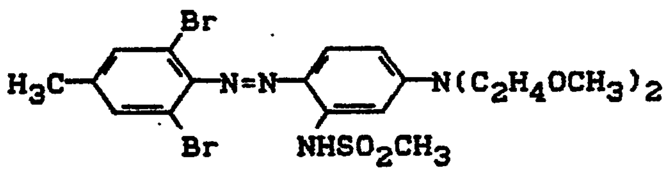

21,1 g 36,5-proz. feuchtes 2,6-Dibrom-4-methylanilin werden in 7 ml Wasser, 12 ml konz. Salzsäure und 25 g Eis angerührt. In einer Stunde ließ man 7,2 ml 30-proz. Nitritlösung zutropfen. Man rührte noch weitere 30 Minuten bei 0° C und zerstörte den nitritüberschuß durch Zugabe von 4 ml 10-proz. Amidosulfonsäurelösung. Die Lösung der Diazotierung wurde geklärt und zu einer Lösung von 9,2 g 3-Bis-(methozyethyl)-amino-methansulfonsäureanilid und 2 g Harnstoff in 125 ml Eisessig zugetropft. Durch Zugabe von Eis wurde die Temperatur bei 0° C gehalten. Mit Natriumacetat wurde auf pH 3 abgestrumpft. Nach Rühren über Nacht dekantierte man die wäßrige Lösung ab, löste den entstandenen Sirup in Methylenchlorid, entsäuerte mit Natriumbicarbonat und trocknete die methylenchloridlösung über Natriumsulfat. Nach Einengen im Vakuum erhielt man 17,6 g eines orange-roten Öles.

Die benötigte Kupplungskomponente wurde durch saure Verseifung von 3-Bis-(methoxyethyl)-aminoacetanilid und anschließende Umsetzung des 3-Bis-(methoxyethyl)-amino-anilins mit Methansulfochlorid im wäßrigem Medium bei 50° erhalten.

Beispiel 2. Herstellung des Farbstoffs der Formel

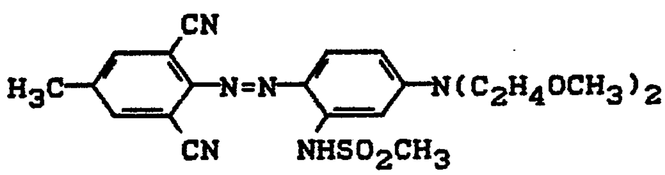

Eine Lösung von 14,45 g des in Beispiel 1 genannten Farbstoffs in 25 ml Dimethylformamid wurde mit 2,95 g 95-proz. Zinkcyanid und 0,23 g Kupfer-(I)-cyanid versetzt und innerhalb von 30 Minuten auf 100°C erwärmt. Man rührte weitere 15 Minuten bei 100°C, ließ auf Raumtemperatur abkühlen und verdünnte mit 25 ml Methanol. Nach Absaugen wurde mit wenig Methanol, 10-proz. Salzsäure und Wasser gewaschen. Ausbeute: 9,1 g.

Der Farbstoff färbt Polyester nach üblichen Färbeverfahren z.B. dem HT-Verfahren in einem klaren gelbstichigen Rot mit sehr guten Echtheiten, insbesondere mit sehr guter Thermomigrierechtheit.

Nach analogen oder ähnlichen Verfahren können die nachfolgenden Farbstoffe erhalten werden:

| Bsp. Nr. | | Farbton auf Polyester |
|---|---|---|
| 3 | 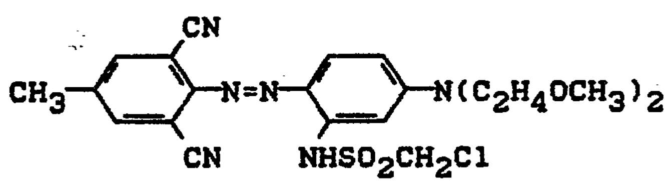 | gelbst. Rot |

| Bsp. Nr. | | Farbton auf Polyester |
|---|---|---|
| 4 | 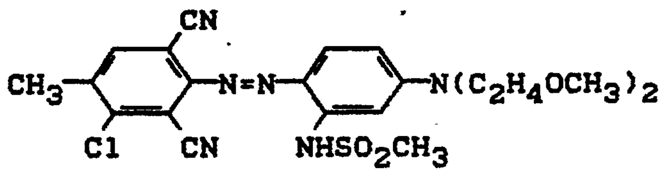 | blaust. Rot |
| 5 | 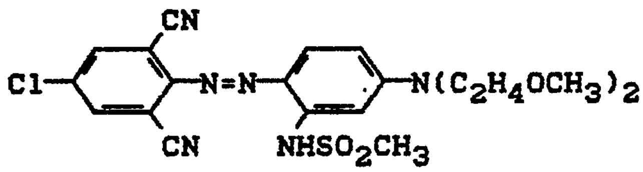 | stark blaust. Rot |
| 6 | 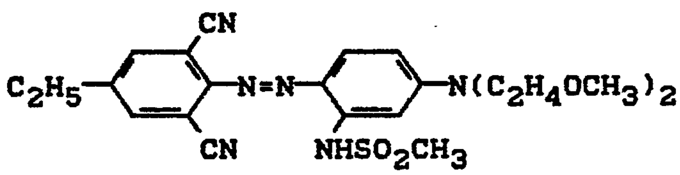 | gelbst. Rot |
| 7 | 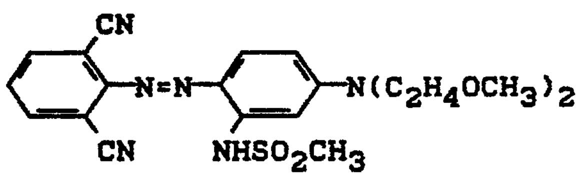 | Rot |
| 8 | 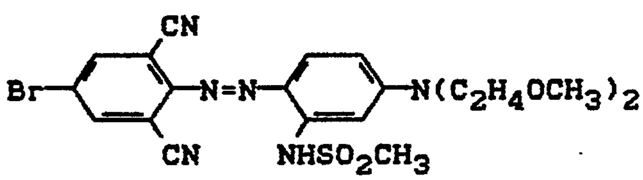 | stark blaust. Rot |
| 9 | 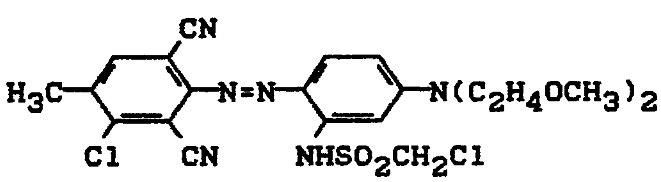 | blaust. Rot |
| 10 | 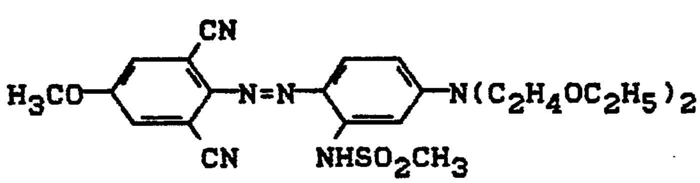 | gelbst. Rot |

| Bsp. Nr. | | Farbton auf Polyester |
|---|---|---|
| 11 | 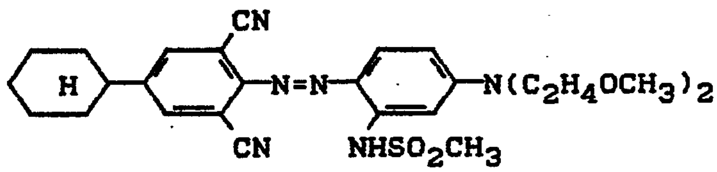 | gelbst. Rot |
| 12 | 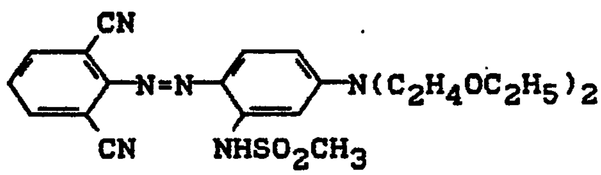 | Rot |
| 13 | 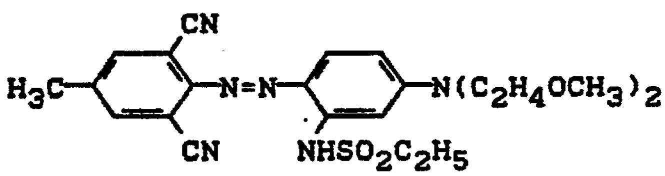 | gelbst. Rot |

## Patentansprüche

1. Azofarbstoffe der Formel

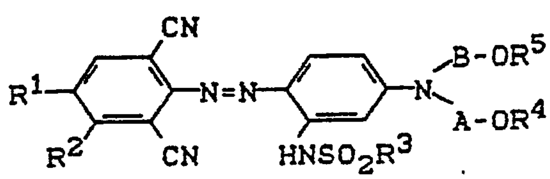

(I)

worin
$R^1$ H, $C_1$–$C_4$-Alkyl, $C_1$–$C_4$-Alkoxy, Chlor, Brom oder $C_5$–$C_6$-Cycloalkyl,
$R_2$ Wasserstoff, Methyl oder Chlor,
$R^3$ gegebenenfalls durch Cl oder $C_1$–$C_2$-Alkoxy substituiertes $C_1$–$C_4$-Alkyl,
$R^4$, $R_5$ gleiches oder verschiedenes $C_1$–$C_4$-Alkyl und
A/B gleiches oder verschiedenes $C_2$–$C_4$-Alkylen bedeuten – mit Ausnahme der Verbindung der Formel

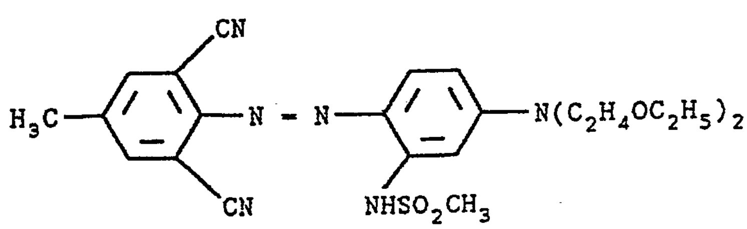

2. Azofarbstoffe gemäß Anspruch 1, dadurch gekennzeichnet, daß

$R^1$ $C_1$-$C_2$-Alkyl,

$R^2$ Wasserstoff

$R^3$ $C_1$-$C_2$-Alkyl,

$R^4$, $R^5$ Methyl und

A/B $C_2H_4$ bedeuten.

3. Azofarbstoffe gemäß Anspruch 1, dadurch gekennzeichnet, daß $R^1 = CH_3$ ist.

4. Azofarbstoff der Formel

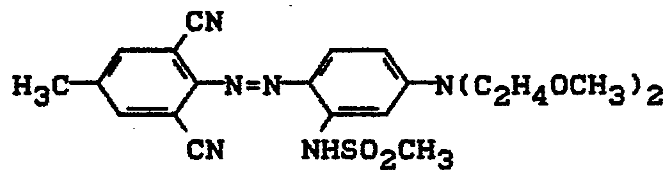

5. Azofarbstoffe gemäß Anspruch 1, dadurch gekennzeichnet, daß

$R^1$ H oder $C_2$-$C_4$-Alkyl,

$R^2$ Wasserstoff,

$R^3$, $R^4$, $R^5$ $C_1$-$C_2$-Alkyl und

A/B $C_2H_4$ bedeuten.

6. Azofarbstoffe gemäß Anspruch 1, dadurch gekennzeichnet, daß

$R^1$ Cl oder Br,

$R^2$ Wasserstoff,

$R^3$, $R^4$, $R^5$ $C_1$-$C_2$-Alkyl und

A/B $C_2H_4$ bedeuten.

7. Azofarbstoffe gemäß Anspruch 1, dadurch gekennzeichent, daß

$R^1$ Cyclohexyl,

$R^2$ Wasserstoff,

$R^3$, $R^4$, $R^5$ $C_1$-$C_2$-Alkyl und

A/B $C_2H_4$ bedeuten.

8. Azofarbstoff gemäß Anspruch 1 der Formel

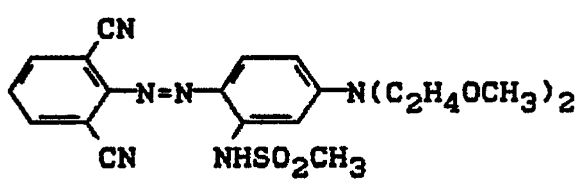

9. Verfahren zur Herstellung von Azofarbstoffen gemäß Anspruch 1, dadurch gekennzeichnet, daß man in entsprechenden o,o'-Dihalogenazoverbindungen die Halogenatome in an sich bekannter Weise gegen CN ersetzt.

10. Verwendung der Azofarbstoffe gemäß Anspruch 1 zum Färben von Synthesefasern.

**Claims**

1. Azo dyestuffs of the formula

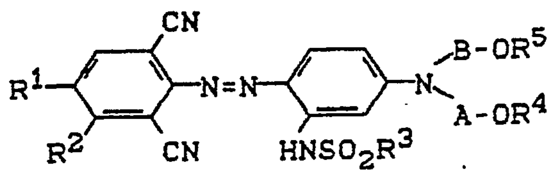

(I)

in which
$R^1$ denotes H, $C_1$–$C_4$-alkyl, $C_1$–$C_4$-alkoxy, chlorine, bromine or $C_5$–$C_6$-cycloalkyl,
$R^2$ denotes hydrogen, methyl or chlorine,
$R^3$ denotes optinally Cl- or $C_1$–$C_2$-alkoxy-substituted $C_1$–$C_4$-alkyl,
$R^3$, $R^5$ denote identical or different $C_1$–$C_2$-alkyl and
A/B denote identical or different $C_2$–$C_4$-alkylene – with the exception of the compound of the formula

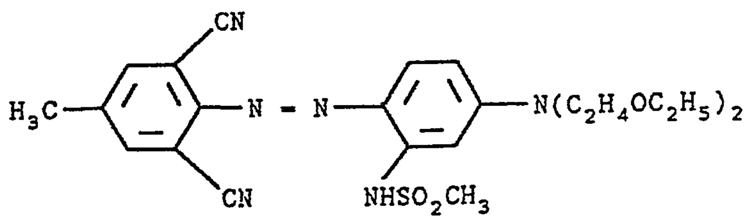

2. Azo dyestuffs according to Claim 1, characterized in that
$R^1$ denotes $C_1$–$C_2$-alkyl,
$R^2$ denotes hydrogen,
$R^3$ denotes $C_1$–$C_2$-alkyl,
$R^4$, $R^5$ denote methyl and
A/B denote $C_2H_4$.

3. Azo dyestuffs according to Claim 1, characterized in that $R^1$ is $CH_3$.

4. Azo dyestuff of the formula

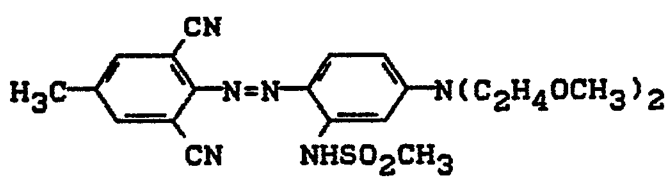

5. Azo dyestuffs according to Claim 1, characterized in that
$R^1$ denotes H or $C_2$–$C_4$-alkyl,
$R^2$ denotes hydrogen,
$R^3$, $R^4$, $R^5$ denote $C_1$–$C_2$-alkyl and
A/B denote $C_2H_4$.

6. Azo dyestuffs according to Claim 1, characterized in that
$R^1$ denotes Cl or Br,
$R^2$ denotes hydrogen,
$R_3$, $R^4$, $R^5$ denote $C_1$–$C_2$-alkyl and
A/B denote $C_2H_4$.

7. Azo dyestuffs according to Claim 1, characterized in that
$R^1$ denotes cyclohexyl,
$R^2$ denotes hydrogen,
$R^3$, $R^4$, $R^5$ denote $C_1$–$C_2$-alkyl and
A/B denote $C_2H_4$.

8. Azo dyestuff according to Claim 1 of the formula

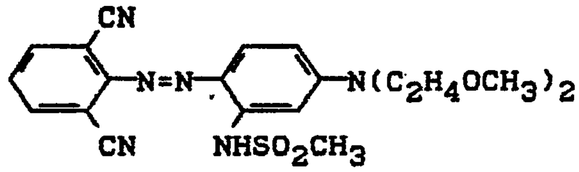

9. Process for preparing azo dyestuffs according to Claim 1, characterized in that in corresponding o,o'-dihalogenoazo compounds the halogen atoms are replaced in a manner known per se by CN.

10. Use of the azo dyestuffs according to Claim 1, for dyeing synthetic fibres.

**Revendications**

1. Colorants azoïques de formule

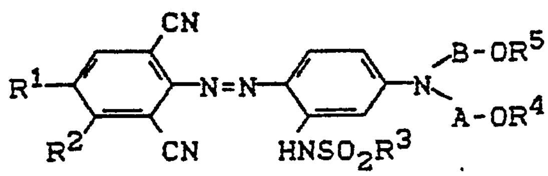

(I)

dans laquelle
$R^1$ représente H, un groupe alkyle en $C_1$ à $C_4$, alkoxy en $C_1$ à $C_4$, le chlore, le brome ou un groupe cycloalkyle en $C_5$ ou $C_6$,
$R^2$ est l'hydrogène, le groupe méthyle ou le chlore,
$R^3$ est un groupe alkyle en $C_1$ à $C_4$ éventuellement substitué par du chlore ou un radical alkoxy en $C_1$ ou $C_2$,
$R^4$, $R^5$ sont des groupes alkyle en $C_1$ ou $C_2$ identiques ou différents et
A/B sont des groupes alkylène en $C_2$ à $C_4$ identiques ou différents – à l'exception du composé de formule

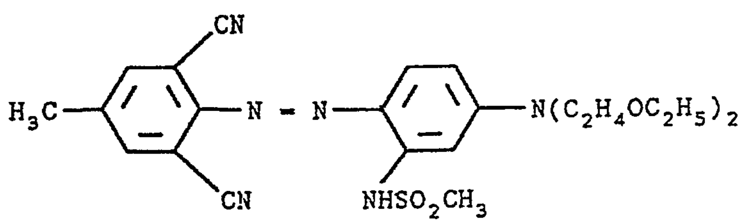

2. Colorants azoïques suivant la revendication 1, caractérisés en ce que
$R^1$ est un groupe alkyle en $C_1$ ou $C_2$,
$R^2$ est l'hydrogène,
$R^3$ est un groupe alkyle en $C_1$ ou $C_2$,
$R_4$, $R^5$ sont des groupes méthyle et
A/B sont des groupes $C_2H_4$.

3. Colorants azoïques suivant la revendication 1, caractérisés en ce que $R^1$ est un groupe $CH_3$.

4. Colorant azoïque de formule

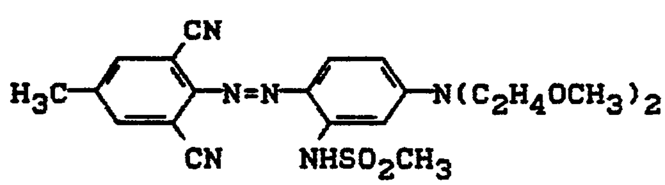

5. Colorants azoïques suivant la revendication 1, caractérisés en ce que
$R^1$ représente H ou un groupe alkyle en $C_2$ à $C_4$,
$R^2$ est l'hydrogène,
$R^3$, $R^4$, $R^5$ sont des groupes alkyle en $C_1$ à $C_2$ et
A/B représentent des groupes $C_2H_4$.

6. Colorants azoïques suivant la revendication 1, caractérisés en ce que
$R^1$ représente Cl ou Br,
$R^2$ représente l'hydrogène,
$R^3$, $R_4$, $R^5$ sont des groupes alkyle en $C_1$ ou $C_2$ et
A/B sont des groupes $C_2H_4$.

7. Colorants azoïques suivant la revendication 1, caractérisés en ce que
$R^1$ est un groupe cyclohexyle,
$R^2$ est l'hydrogène,
$R^3$, $R^4$, $R^5$ sont des groupes alkyle en $C_1$ ou $C_2$ et
A/B sont des groupes $C_2H_4$.

8. Colorant azoïque suivant la revendication 1, de formule

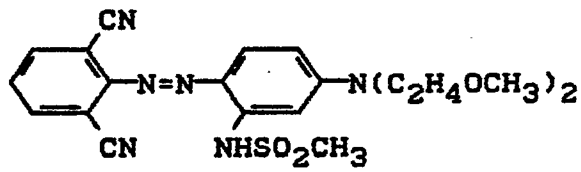

9. Procédé de production de colorants azoïques suivant la revendication 1, caractérisé en ce qu'on remplace d'une manière connue dans des composés o,o'-dihalogénoazoïques correspondants, les atoms d'halogènes contre des groupes CN.

10. Utilisation des colorants azoïques suivant la revendication 1 pour la teinture de fibres synthétiques.